# EUROPÄISCHE PATENTSCHRIFT

(11) **EP 3 498 504 B1**
(45) Veröffentlichungstag und Bekanntmachung des Hinweises auf die Patenterteilung: **14.07.2021**
(21) Anmeldenummer: 17207594.7
(22) Anmeldetag: 15.12.2017
(51) Int. Cl.: B60G 7/00

(54) **FEDERLENKER FÜR EINE RADAUFHÄNGUNG EINES KRAFTFAHRZEUGES**
SUSPENSION ARM FOR A WHEEL SUSPENSION OF A MOTOR VEHICLE
BRAS DE SUSPENSION À RESSORT POUR UNE SUSPENSION DE ROUE D'UN VÉHICULE AUTOMOBILE

(43) Veröffentlichungstag der Anmeldung: 19.06.2019
(73) Patentinhaber: Autotech Engineering Deutschland GmbH, 33647 Bielefeld (DE)
(72) Erfinder: Kreisig, Ralf, 33729 Bielefeld (DE); Leimkühler, Leslie, 33613 Bielefeld (DE)
(74) Vertreter: Cohausz & Florack

(56) Entgegenhaltungen:
- WO-A1-2012/164373
- CN-A- 1 739 992
- DE-A1-102004 008 957
- DE-A1-102005 013 374
- DE-A1-102012 100 719
- DE-A1-102013 222 234
- DE-A1-102016 109 896
- JP-A- 2009 029 230
- JP-A- 2016 037 253
- US-A- 3 797 852

## Beschreibung

Die Erfindung betrifft einen Federlenker für eine Radaufhängung eines Kraftfahrzeuges nach dem Oberbegriff des Anspruchs 1. Der erfindungsgemäße Federlenker hat einen ersten Endabschnitt zur Anbindung an einem Fahrwerksträger, einen zweiten Endabschnitt zur radseitigen Anbindung und einen zwischen den beiden Endabschnitten angeordneten Abschnitt, der einen Mittelsteg mit davon abstehenden Seitenstegen aufweist und eine Aufnahme zur Abstützung oder Anbindung einer Feder definiert. Die Aufnahme kann als Federsitz zur Abstützung einer schraubenförmigen Feder oder als Aufnahme zur Anbindung eines Federdämpfers ausgeführt sein. Des Weiteren hat der erfindungsgemäße Federlenker eine Federlenkerabdeckung, die als Schutzabdeckung und/oder als aerodynamische Luftleitabdeckung dient.

Federlenker dienen der Führung eines Fahrwerkrades an einer Radaufhängung eines Kraftfahrzeuges. Sie weisen einen Abschnitt zur Abstützung einer Feder oder einer Feder-Stoßdämpfer-Anordnung auf, die ihrerseits gegen die Karosserie abgestützt ist.

Federlenker unterliegen im Fahrbetrieb oft hohen wechselnden Belastungen. Bei nicht ausreichender Steifigkeit des Federlenkers kann es insbesondere im Bereich der Federauflage zu einer Aufweitung bzw. Verformung des Federlenkers kommen. Um eine hohe Belastbarkeit im Bereich der Federauflage zu erzielen, sind bekannte Federlenker mit einem oder mehreren verstärkenden Zusatzblechen versehen. Als verstärkende Zusatzbleche werden beispielsweise topfförmige Schalen im Bereich der Federauflage in den breitenerweiterten Abschnitt des Federlenkers eingesetzt. Des Weiteren sind mehrschalige Federlenker bekannt, die im Bereich der Federauflage ein Schließ- oder Brückenblech aufweisen, das mit den beiden Seitenstegen (Flanken) der rinnenförmigen Federlenkerschale durch Nieten, Schrauben oder Schweißverbindungen verbunden ist (siehe z. B. DE 10 2004 008 957 A1).

Die Herstellung und Eingliederung der zusätzlichen Schalen bzw. Schließ- und Überbrückungsbleche erfordert entsprechende Fertigungsschritte, was hinsichtlich der Herstellungskosten ungünstig ist. Zudem besitzen bekannte mehrschalige Federlenker aufgrund ihrer verstärkenden Zusatzbleche mitunter ein relativ hohes Bauteilgewicht.

Aus der DE 10 2006 032 595 A1 ist ein einschaliger Federlenker bekannt, dessen einstückig ausgebildete Federlenkerschale einen ersten Endabschnitt zur fahrzeugaufbauseitigen Anbindung, einen zweiten Endabschnitt zur radseitigen Anbindung und einen breitenerweiterten Abschnitt zur Abstützung einer Feder aufweist. Der breitenerweiterte Abschnitt besitzt ein U-förmiges Profil, dessen freie Enden jeweils zu einem Kragen (Flansch) nach außen gebogen sind. Ferner weist der breitenerweiterte Abschnitt eine nach außen ausgestülpte Ringfläche als Federsitz auf. Zur besseren Zentrierung der Feder ist innerhalb der Ringfläche eine nach innen gerichtete Erhebung ausgeformt, die mit einer zentralen Öffnung versehen ist. Dieser einschalige Federlenker hat gegenüber den bekannten mehrschaligen Federlenkern ein geringeres Bauteilgewicht. Bei seiner Herstellung fallen Fertigungsschritte weg, die bei den mehrschaligen Federlenkern für die Herstellung und Eingliederung der zusätzlichen Schließ- und Überbrückungsbleche erforderlich sind.

Des Weiteren ist es bekannt, Fahrwerkslenker, insbesondere Federlenker, mit einer Abdeckung zu versehen, um dadurch eine günstige Umströmung des Unterbodens im Bereich der Radaufhängung zu erzielen. Solche Abdeckungen, die auch als Luftleiteinrichtungen oder aerodynamische Verkleidungen bezeichnet werden, können zudem als Steinschlagschutz dienen (vgl. z.B. DE 3110 991 A1 und DE 10 2014 008 121 A1).

Aus der EP 2 789 527 A1 ist ein Fahrwerkslenker mit einer Luftleiteinrichtung bekannt, der in Einbaulage ein nach unten offenes Querschnittsprofil hat, welches eine Basisfläche und zwei von der Basisfläche abstehende Seitenstege (Flanken) aufweist. Die Luftleiteinrichtung umfasst ein Luftleitelement aus Kunststoff und ein Versteifungselement zur Anordnung an den Seitenstegen des Fahrwerklenkers. Hierzu sind die Seitenstege an ihrem unteren Ende zur Horizontalen abgewinkelt, so dass dort Befestigungsmittel, wie zum Beispiel Spreizniete, zur Anordnung des Versteifungselements der Luftleiteinrichtung aufgenommen werden können. Die Abwinkelung (Abkantung) des jeweiligen Seitensteges ist üblicherweise in Form eines Außenflansches oder einer nach außen vorstehenden Lasche ausgeführt.

Beim Einsatz neuer Assistenz- und Steuerungssysteme im Fahrwerksbereich, wie beispielsweise adaptive Dämpfungssysteme, treten bei der herkömmlichen Anbindung von Federlenkerabdeckungen an einem zur Horizontalen abgewinkelten Außenflansch bzw. an entsprechend abgewinkelten Laschen des Federlenkers Platzprobleme auf. Denn die die Federlenkerabdeckung haltenden Spreiznieten blockieren dabei durch ihren Überstand mitunter den für das Assistenz- und Steuerungssystem benötigten Bauraum bzw. Bewegungsraum.

Aus der WO 2012/164373 A1, in welcher der nächstkommende Stand der Technik gesehen werden kann, ist ein Federlenker bekannt, der Endabschnitte zur Anbindung an einen Fahrwerksträger bzw. zur radseitigen Anbindung sowie einen Mittelsteg mit davon abstehenden Seitenstegen aufweist. Des Weiteren weist der Federlenker einen Abschnitt zur Aufnahme einer Feder auf. Die Seitenstege weisen jeweils einen dem Mittelsteg abgewandten Kantenabschnitt auf, welcher in Form eines nach außen abgewinkelten Flansches ausgebildet ist. Die Flansche weisen Schraublöcher auf, an denen Muttern zur Aufnahme von Verbindungsschrauben einer Federlenkerabdeckung angeschweißt sind.

Die DE 10 2005 013 374 A1 zeigt eine Halterung für einen schwenkbaren Querlenker einer Radaufhängung mittels eines an einer Lenkeraufnahme angeordneten elastischen Lagers. Das elastische Lager setzt sich aus einem äußeren Stützkörper und einem inneren Stützkörper zusammen. Der Querlenker hat zwei Endabschnitte, einen zwischen den Endabschnitten angeordneten Mittelbereich sowie Seitenstege. Die Seitenstege weisen jeweils einen ausgeformten Absatz auf, der zwischen dem Mittelsteg und einem dem Mittelsteg abgewandten Kantenabschnitt des Seitenstegs angeordnet ist, wobei der Absatz ein Durchgangsloch aufweist, mit welchem der äußere Stützkörper des Lagers mittels Schrauben mit dem Querlenker befestigbar ist. Eine Federlenkerabdeckung der eingangs genannten Art lässt sich der DE 10 2005 013 374 A1 nicht entnehmen.

Die DE 10 2012 100 719 A1 offenbart einen Federlenker für eine Radaufhängung eines Kraftfahrzeuges, der ebenfalls Endabschnitte zur Anbindung an einen Fahrwerksträger bzw. zur radseitigen Anbindung sowie einen Mittelsteg mit davon abstehenden Seitenstegen (Flanken) aufweist. Der Rücken des Federlenkers definiert einen äußeren Federsitz zur Abstützung einer Feder. Die Seitenstege (Flanken) weisen nach innen umgeformte Flächenanteile auf, deren Längskanten über ihre Gesamtlänge voneinander beabstandet sind, so dass der zwischen den Endabschnitten angeordnete breitenerweiterte Abschnitt, der den Rücken und den Federsitz definiert, ein C-profilförmiges Querschnittsprofil aufweist. Zudem ist zwischen dem Federsitz und dem radseitigen Endabschnitt ein Verbindungsabschnitt zur Anbindung eines Stoßdämpfers ausgebildet. Eine Federlenkerabdeckung der eingangs genannten Art lässt sich der DE 10 2005 013 374 A1 nicht entnehmen.

Die US 3 797 852 A beschreibt eine Radaufhängung für ein Kraftfahrzeug mit einem von einer Feder umgebenen Stoßdämpfer. Die unteren Enden des Stoßdämpfers und der Feder sind mit einem Federlenker verbunden. Der Federlenker hat einen unteren Mittelsteg mit einem Sitzabschnitt zur Aufnahme der Feder und des Stoßdämpfers. Ein oberer Mittelsteg des Federlenkers weist mehrere Löcher zur Aufnahme von Schrauben auf. Die Löcher und Schrauben dienen der Anbindung des vorderen Endes einer Druckstrebe an den Federlenker. Eine Federlenkerabdeckung der eingangs genannten Art lässt sich der US 3 797 852 A nicht entnehmen.

Die DE 10 2013 222 234 A1 offenbart einen Federlenker für eine Radaufhängung umfassend ein Schalenelement zur Abstützung einer Fahrzeugfeder und ein Schließblech, das an dem Schalenelement befestigt ist. Das Schalenelement weist in Einbaulage ein nach unten offenes Profil auf. Das Schließblech verbindet an der nach unten offenen Profilseite des Schalenelements zwei gegenüberliegende Seitenwangen desselben zumindest im Bereich der Abstützung einer Fahrzeugfeder. Das Schließblech dient der Aussteifung des Federlenkers.

Der Erfindung liegt die Aufgabe zugrunde, einen Federlenker der eingangs genannten Art zu schaffen, der bei relativ geringem Bauteilgewicht sowie günstigen Herstellungskosten eine optimierte Anbindung einer aerodynamischen und/oder vor Steinschlag schützenden Federlenkerabdeckung bietet, so dass ein Verlust an Bauraum oder Bewegungsraum für eine Fahrwerkskomponente, wie etwa eine Komponente eines adaptiven Dämpfungssystems oder dergleichen, weitgehend vermieden wird.

Zur Lösung dieser Aufgabe wird ein Federlenker mit den in Anspruch 1 angegebenen Merkmalen vorgeschlagen. Bevorzugte und vorteilhafte Ausgestaltungen des erfindungsgemäßen Federlenkers sind in den Unteransprüchen angegeben.

Bei dem erfindungsgemäßen Federlenker ist in beiden Seitenstegen jeweils mindestens ein Absatz ausgeformt, wobei der jeweilige Absatz zwischen dem Mittelsteg und einem dem Mittelsteg abgewandten Kantenabschnitt des betreffenden Seitensteges angeordnet ist, wobei der jeweilige Absatz ein Loch zur Anbindung der Federlenkerabdeckung aufweist und somit eine Anbindungsstelle und Anlagefläche für die Federlenkerabdeckung definiert, und wobei die Federlenkerabdeckung an dem Loch des mindestens einen Absatzes befestigt ist. Der erfindungsgemäße Federlenker ist dadurch gekennzeichnet, dass der dem Mittelsteg abgewandte Kantenabschnitt des jeweiligen Seitensteges in Form eines Flansches ausgebildet ist, wobei die Anlagefläche eine Anbindungsebene für die Anbindung der Federlenkerabdeckung definiert, wobei diese Anbindungsebene mindestens 10 mm von der Tangentialebene beabstandet ist, an welcher von beiden Seitenstegen der jeweilige dem Mittelsteg abgewandte, in Form eines Flansches ausgebildete Kantenabschnitt des jeweiligen Seitensteges angrenzt.

Erfindungsgemäß wird somit eine Anbindungsstelle für die Federlenkerabdeckung, vorzugsweise Aerodynamikabdeckung, in den Federlenker verlegt. Hierdurch lässt sich erreichen, dass das an dieser Anbindungsstelle angeordnete Befestigungsmittel, z.B. ein Spreizniet, weitestgehend innerhalb des Federlenkers aufgenommen ist und nicht mehr über den dem Mittelsteg abgewandten Kantenabschnitt des Seitensteges vorsteht. Ein durch das Befestigungsmittel verursachtes Blockieren von Bauraum, der für eine Komponente eines Assistenz- und Steuerungssystem, z.B. eines adaptiven Dämpfersystems, benötigt wird, kann somit vermieden werden. Die in den Federlenker verlegte, durch den erfindungsgemäß ausgebildeten Absatz definierte Anbindungsstelle vergrößert den Bauraum oder Bewegungsraum für eine am oder nahe dem Federlenker angeordnete Fahrwerkskomponente. Somit lässt sich zusätzlicher Bauraum oder Bewegungsraum für Fahrwerkskomponenten gewinnen und/oder der vorhandene Bauraum besser nutzen.

Der erfindungsgemäße Federlenker ist vorzugsweise aus Stahlblech geformt und als einschaliger Federlenker ausgeführt.

Die an dem erfindungsgemäßen Federlenker abstützbare bzw. anbindbare Feder kann beispielsweise in Form einer Schraubenfeder oder einer mit einem Stoßdämpfer kombinierten Schraubenfeder ausgebildet sein. Ein solcher Stoßdämpfer wird auch als Federdämpfer bezeichnet.

Zur Gewinnung von zusätzlichem Bauraum oder Bewegungsraum für Fahrwerkskomponenten bzw. zur besseren Nutzung von vorhandenem Bauraum ist auch eine Ausführung eines Federlenkers denkbar, bei welcher am Seitensteg des Federlenkers eine oder mehrere nach außen vorstehende Laschen vorgesehen werden, wobei eine Metallplatine, aus welcher der Federlenker geformt wird, mit Materialzugabe für die Laschen zugeschnitten und die jeweilige Lasche dann durch Abkanten eines Außenflansches des Federlenkers ausgebildet wird. Eine solche Ausführung ist technisch zwar möglich, ihre Verwirklichung ist jedoch kompliziert. Es werden hierzu zusätzliche Werkzeugstufen für das Umformen und den Beschnitt benötigt. Zudem erhöht sich der Rohmaterialeinsatz pro Federlenker.

Dagegen zeichnet sich der erfindungsgemäße Lösungsvorschlag durch den Wegfall von komplizierten Abkantschritten bzw. die Vermeidung von zusätzlichen Werkzeugstufen aus. Insbesondere ermöglicht der erfindungsgemäße Lösungsvorschlag Gewichts- und Kosteneinsparungen. Denn durch den in den Seitensteg des Federlenkers ausgeformten Absatz ergibt sich eine höhere Bauteilsteifigkeit, die eine Reduzierung der Materialdicke (Blechdicke) ermöglicht.

Erfindungsgemäß ist in beiden Seitenstegen des Federlenkers jeweils mindestens ein Absatz ausgeformt (ausgebildet), wobei der jeweilige Absatz zwischen dem Mittelsteg und einem dem Mittelsteg abgewandten Kantenabschnitt des betreffenden Seitensteges angeordnet ist, und wobei der Absatz ein Loch zur Anbindung einer Federlenkerabdeckung aufweist.

Eine Ausgestaltung des erfindungsgemäßen Federlenkers ist dadurch gekennzeichnet, dass der Abstand der in den gegenüberliegenden Absätzen ausgebildeten Löcher kleiner ist als der größte Abstand der Seitenstege in dem eine Aufnahme zur Abstützung oder Anbindung einer Feder definierenden Abschnitt des Federlenkers. Der Abstand der in den beiden Seitenstegen ausgeformten Absätze und damit der Abstand der durch die Absätze definierten Anbindungspunkte (Abstützpunkte) der Federlenkerabdeckung sind somit relativ eng oder kompakt bemessen. Ein relativ enger oder kleiner Abstand der Anbindungspunkte (Abstützpunkte) der Federlenkerabdeckung ermöglicht eine Materialersparnis bei der Federlenkerabdeckung (Aerodynamikabdeckung).

Da der Anbindungspunkt (Abstützpunkt) eine gewisse Flächenausdehnung aufweist, kann er auch als Anbindungsfläche, Anlagefläche oder Abstützfläche bezeichnet werden.

Die von dem jeweiligen Absatz definierte Anlagefläche für die Federlenkerabdeckung verläuft vorzugsweise im Wesentlichen parallel zu dem jeweiligen in Form eines Flansches ausgebildeten Kantenabschnitt des jeweiligen Seitensteges und/oder zu dem Mittelsteg, wobei das Loch zur Anbindung der Federlenkerabdeckung in der Anlagefläche ausgebildet ist.

Für einen Gewinn von zusätzlichem Bauraum oder Bewegungsraum für eine Fahrwerkskomponente, beispielsweise eine Komponente eines adaptiven Dämpfersystems, bzw. für eine optimierte Nutzung von vorhandenem Bauraum wird insbesondere vorgeschlagen, dass die von der Anlagefläche definierte Anbindungsebene vorzugsweise mindestens 15 mm, besonders bevorzugt mindestens 20 mm von einer Tangentialebene beabstandet ist, an welcher von beiden Seitenstegen der jeweilige dem Mittelsteg abgewandte, in Form eines Flansches ausgebildete Kantenabschnitt des jeweiligen Seitensteges angrenzt.

Hinsichtlich einer hohen Bauteilsteifigkeit des Federlenkers sowie einer stabilen Anbindung.der Federlenkerabdeckung ist es günstig, wenn nach einer weiteren Ausgestaltung die von dem jeweiligen Absatz definierte Anlagefläche (Anbindungsebene) näher an dem in Form eines Flansches ausgebildeten Kantenabschnitt des Seitensteges, in welchem der Absatz ausgeformt ist, liegt als an dem Mittelsteg.

Eine weitere vorteilhafte Ausgestaltung des erfindungsgemäßen Federlenkers ist dadurch gekennzeichnet, dass die Anlagefläche durch zwei konvex gekrümmte Seitenlinien begrenzt ist, welche zwei im Wesentlichen spitzförmige Flächenenden definieren. Diese Ausgestaltung lässt sich fertigungstechnisch gut realisieren, ohne dass eine Stahlplatine, aus welcher der Federlenker geformt wird, im Bereich des in dem Seitensteg ausgeformten Absatzes einer übermäßigen Zugdehnung und/oder übermäßigen Biegung unterworfen wird. Die konvex gekrümmten Seitenlinien entsprechen dabei einerseits der Kante des Absatzes am Übergang von dem Seitensteg zu der das Loch zur Anbindung der Federlenkerabdeckung aufweisenden Anlagefläche, und andererseits der Kehllinie am Übergang der besagten Anlagefläche zu dem Seitensteg. Die durch die beiden konvex gekrümmten Seitenlinien definierten spitzförmigen Flächenenden sind dabei vorzugsweise als sich verjüngende oder zunehmend schmaler werdende Flächenenden ausgebildet. Diese spitzförmigen Flächenenden müssen und sollten nicht scharfkantig sein.

Zur Erzielung einer klapperfreien bzw. spielfreien Anbindung der Federlenkerabdeckung an dem Federlenker sieht eine weitere Ausgestaltung vor, dass die durch den in dem Seitensteg ausgeformten Absatz definierte Anlagefläche länglich ausgebildet ist und entlang ihrer Längsachse gekrümmt ist. Hierdurch kann die Federlenkerabdeckung mit einem Befestigungsmittel, beispielsweise einem Spreizniet, relativ einfach in der Weise montiert werden, dass sie durch das Befestigungsmittel gegen die Anlagefläche gedrückt bzw. gezogen wird.

Eine weitere bevorzugte Ausgestaltung des erfindungsgemäßen Federlenkers besteht darin, dass der Absatz oder mindestens zwei der Absätze zwischen der Aufnahme zur Abstützung oder Anbindung einer Feder und dem der radseitigen Anbindung dienenden Endabschnitt des Federlenkers angeordnet ist/sind. Dieser Bereich des Federlenkers ist für eine stabile sowie materialsparende Anbindung einer aerodynamischen Federlenkerabdeckung besonders günstig, wobei in diesem Bereich allerdings auch weitere Fahrwerkkomponenten vorteilhaft angeordnet werden können. So kann der Seitensteg unterhalb des Absatzes nach einer weiteren Ausgestaltung des erfindungsgemäßen Federlenkers ein Loch zur Anbindung eines Stoßdämpfers aufweisen. Die Anbindung eines Stoßdämpfers zwischen der Aufnahme zur Abstützung oder Anbindung einer Feder und dem der radseitigen Anbindung dienenden Endabschnitt des Federlenkers ermöglicht einer gleichmäßigere Verteilung der Kräfte und Momente auf den Federlenker und den zugeordneten Fahrzeugaufbau und damit eine optimierte Radaufhängung.

Alternativ oder zusätzlich können der in dem Seitensteg ausgeformte, ein Loch zur Anbindung einer Federlenkerabdeckung aufweisende Absatz oder mindestens zwei derartige Absätze auch zwischen der Aufnahme zur Abstützung oder Anbindung einer Feder und dem der Anbindung an einem Fahrwerksträger dienenden ersten Endabschnitt des Federlenkers angeordnet sein. Die Erfindung umfasst somit insbesondere Ausführungsformen, bei denen alle Befestigungspunkte zur Anbindung der Federlenkerabdeckung an den Federlenker in demselben angeordnet sind. Die Befestigungspunkte können dabei in einer gemeinsamen oder in verschiedenen Anbindungsebenen liegen, die jeweils in dem Federlenker integriert sind.

Nach einer weiteren vorteilhaften Ausgestaltung des erfindungsgemäßen Federlenkers ist im Bereich der Aufnahme zur Abstützung oder Anbindung einer Feder eine Durchgangsöffnung ausgebildet, die durch einen umlaufenden Kragen begrenzt ist. Hierdurch werden eine Gewichtseinsparung sowie eine erhöhte Bauteilsteifigkeit erzielt.

Auch ist es für die Bauteilsteifigkeit des Federlenkers günstig, wenn gemäß einer weiteren Ausgestaltung der dem Mittelsteg abgewandte Kantenabschnitt des jeweiligen Seitensteges in Form eines nach außen abgewinkelten Flansches ausgebildet ist.

Nachfolgend wird die Erfindung anhand einer Ausführungsbeispiele darstellenden Zeichnung näher erläutert. Es zeigen:
- Fig. 1: einen erfindungsgemäßen Federlenker, jedoch ohne dessen Federlenkerabdeckung, wie sie beispielsweise in Fig. 6 oder Fig. 7 gezeigt ist, in einer perspektivischen Ansicht von oben (Fig. 1a) und einer perspektivischen Ansicht von unten (Fig. 1b);
- Fig. 2: den Federlenker aus Fig. 1 in Draufsicht;
- Fig. 3a - 3c: den Federlenker aus Fig. 1 in Querschnittansichten entlang den Schnittlinien IIIa-IIIa, IIIb-IIIb und IIIc-IIIc in Fig. 2;
- Fig. 4: einen Spreizniet in einer perspektivischen Ansicht (Fig. 4a) und in einer Seitenansicht (Fig. 4b);
- Fig. 5: einen weiteren erfindungsgemäßen Federlenker in einer Seitenansicht, mit einer daran montierten, teilweise geschnitten dargestellten Federlenkerabdeckung;
- Fig. 6: den Federlenker aus Fig. 1 in einer Seitenansicht, mit einer daran montierten, teilweise geschnitten dargestellten Federlenkerabdeckung; und
- Fig. 7a, 7b: den Federlenker aus Fig. 1 in Querschnittansichten entlang den Schnittlinien IIIa-IIIa und IIIb-IIIb in Fig. 2, mit einer daran montierten, ebenfalls geschnitten dargestellten Federlenkerabdeckung.

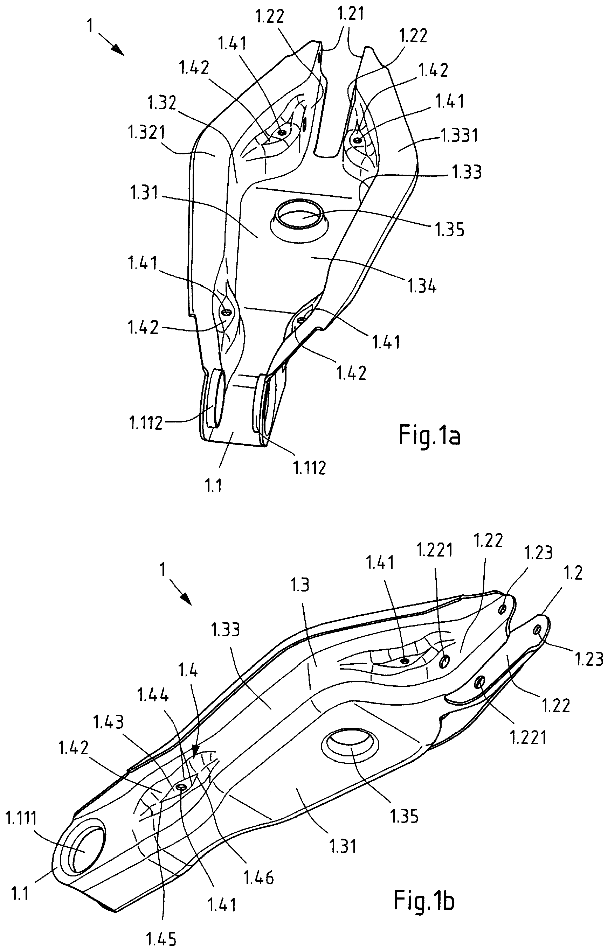

In den Figuren 1a bis 3c ist ein erstes Ausführungsbeispiel eines Federlenkers 1 für eine Radaufhängung Kraftfahrzeuges dargestellt. Der Federlenker 1 ist vorzugsweise als einschaliges Bauteil ausgeführt und durch Umformen einer Metallplatine hergestellt. Er weist einen ersten Endabschnitt 1.1 zur Anbindung an einem Fahrwerksträger, vorzugsweise einem Hinterachsträger, und einen zweiten Endabschnitt 1.2 zur Anbindung an einem Radträger auf. Zwischen den Endabschnitten 1.1, 1.2 ist ein Abschnitt 1.3 angeordnet, der einen Mittelsteg 1.31 mit davon abstehenden Seitenstegen 1.32, 1.33 aufweist und eine Aufnahme 1.34 zur Abstützung einer schraubenförmigen Feder (nicht gezeigt) definiert. Die Aufnahme 1.34 kann auch als Federsitz bezeichnet werden.

Der Federlenker 1 ist vorzugsweise aus hochfestem Stahlblech gefertigt. Das zu seiner Herstellung verwendete Metall- bzw. Stahlblech hat beispielsweise eine Streckgrenze von mindestens 650 MPa und eine Zugfestigkeit von mindestens 800 MPa.

Zur Abstützung der Feder ist der Abschnitt 1.3 des Federlenkers im Wesentlichen rinnenförmig und im Verhältnis zu den Endabschnitten 1.1, 1.2 vorzugsweise breitenerweitert ausgeführt. Die Seitenstege (Flanken) 1.32, 1.33 der Rinne stehen gegenüber deren Mittelsteg (Basisfläche) 1.31 nach oben vor. Die Aufnahme 1.34 zur Abstützung der Feder bzw. die Aufnahme für eine Federunterlage befindet sich auf der Innenseite des Mittelsteges (Basisfläche) 1.31. Innerhalb des Federsitzes ist eine Durchgangsöffnung 1.35 ausgeschnitten, an der vorzugsweise ein nach innen bzw. oben vorstehender Kragen 1.36 als Durchzug ausgebildet ist (vgl. Figuren 1a bis 2 und 3c).

Die Seitenstege 1.32, 1.33 des rinnenförmigen Federlenkers 1 verlaufen durchgehend bis zu dem radträgerseitigen Endabschnitt 1.2. Sie definieren einen gabelförmigen Lagerabschnitt 1.21 zur Anbindung eines Radträgers. Hierzu weisen die Seitenstege 1.32, 1.33 am Ende des Lagerabschnittes 1.21 zueinander fluchtende Bohrungen oder Durchgangslöcher 1.23 auf, die der Aufnahme eines Befestigungsmittels, vorzugsweise eines Schraubbolzens dienen.

Ferner umfasst der Federlenker 1 einen Verbindungsabschnitt 1.22 zur Anbindung eines Stoßdämpfers. Dieser Verbindungsabschnitt 1.22 ist zwischen dem Federsitz (Aufnahme 1.34 zur Abstützung der Feder) und dem radseitigen Endabschnitt 1.2 ausgebildet und weist zwei miteinander fluchtende Durchgangslöcher 1.221 zur Aufnahme eines Befestigungsbolzens für den Stoßdämpfer auf. Bei dem Stoßdämpfer handelt es sich beispielsweise um einen Stoßdämpfer, der mit einem Modul zur adaptiven Einstellung der Dämpfungseigenschaften des Stoßdämpfers versehen ist. Ein solches Modul ist üblicherweise außenseitig an dem Stoßdämpfer angeordnet.

Des Weiteren ist zu erkennen, dass die den breitenerweiterten Abschnitt 1.3 des Federlenkers 1 begrenzenden Seitenstege 1.32, 1.33 auch durchgehend bis zu dem Endabschnitt 1.1 verlaufen, an dem der Federlenker 1 an einem Hinterachsträger oder einem anderen Fahrwerksträger angelenkt wird. Die Seitenstege 1.32,1.33 definieren dort einen Lagerabschnitt, der miteinander fluchtende Durchgangsöffnungen (Lageraugen) 1.111 zur Aufnahme einer Lagerbuchse (nicht gezeigt) aufweist. Die Durchgangsöffnungen 1.111 sind mit Kragen 1.112 zur Abstützung der Lagerbuche versehen. Die Kragen 1.112 sind als Durchzüge der Öffnungen 1.111 hergestellt und vorzugsweise einander zugewandt.

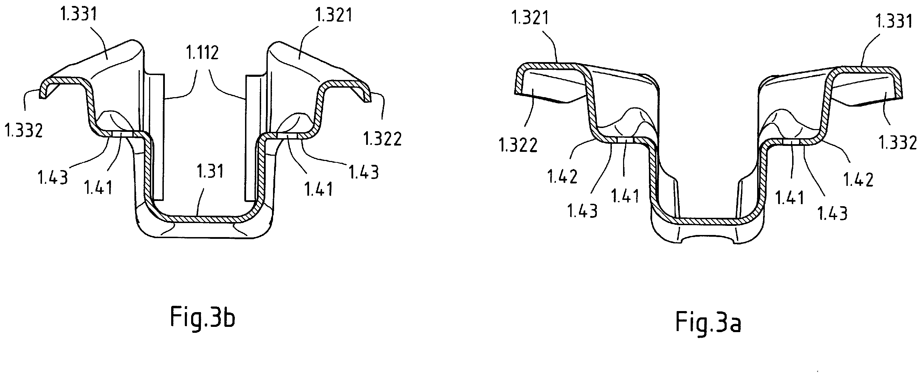

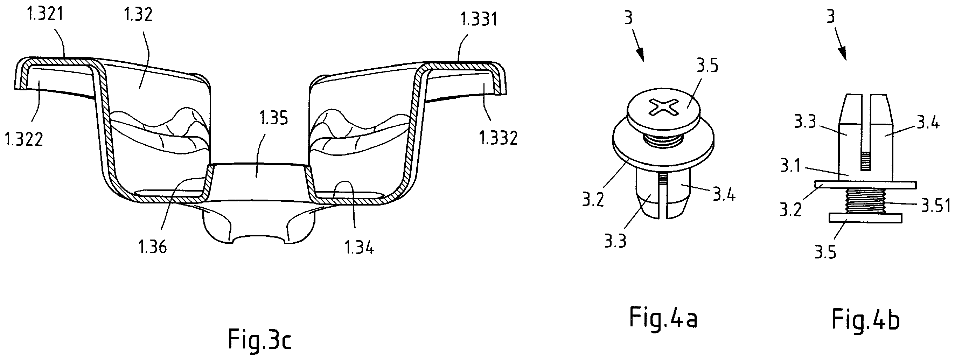

Die der Mittelsteg 1.31 abgewandten Kantenabschnitte 1.321, 1.331 der Seitenstege 1.32, 1.33 sind flanschförmig ausgebildet. Die Seitenstege 1.32, 1.33 sind hierzu nach außen abgekantet. Vorzugsweise sind die Seitenstege 1.32, 1.33 dergestalt abgekantet, dass ihr Flansch (Kantenabschnitt 1.321, 1.331) zumindest entlang einer Teillänge seines Außenrandes nach unten abgewinkelt ist. Die Kantenabschnitte (Flansche) 1.321, 1.331 weisen somit zumindest teilweise einen Randsteg 1.322, 1332 auf (vgl. insbesondere Figuren 1b und 3c).

In dem in den Figuren 1 bis 3 dargestellten Ausführungsbeispiel erstreckt sich der jeweilige Flansch (Kantenabschnitt) 1.321, 1.331 von dem Lagerauge 1.111 am Endabschnitt 1.1 bis zu dem Durchgangsloch 1.23 am radträgerseitigen Endabschnitt 1.2. Der nach unten abgewinkelte Randsteg 1.322, 1.332 des Flansches endet dagegen mit Abstand vor dem Lagerauge 1.111 am Endabschnitt 1.1 sowie mit Abstand vor dem Durchgangsloch 1.23 am radträgerseitigen Endabschnitt 1.2. Beispielsweise beträgt der Abstand des Randsteges 1.322, 1.332 zu dem Lagerauge 1.111 weniger als das Vierfache, vorzugsweise weniger als das Dreifache des Innendurchmessers des Lagerauges 1.111. Am radseitigen Endabschnitt 1.2 des Federlenkers endet der Randsteg 1.322,1.332 vorzugsweise zwischen dem der Anbindung des Radträgers dienenden Durchgangsloch 1.23 und dem der Anbindung eines Stoßdämpfers dienenden Durchgangsloch 1.221.

Des Weiteren sind an dem Federlenker 1 mehrere Befestigungsstellen 1.4 zur Anbindung einer Federlenkerabdeckung 2 ausgebildet, die der Minimierung des Luftwiderstandes im Bereich des Unterbodens des betreffenden Kraftfahrzeuges dient. Alternativ oder zusätzlich kann die Federlenkerabdeckung 2 auch als Schutzabdeckung, insbesondere zum Schutz vor Steinschlag dienen.

Die jeweilige Befestigungsstelle 1.4 zur Anbindung der Federlenkerabdeckung 2 ist in Form eines Durchgangslochs 1.41 ausgebildet, in das ein Spreizniet 3 einsteckbar ist (vgl. Fig. 4a und 4b). Der Spreizniet 3 weist einen ringförmigen Abschnitt 3.1 auf, an dem ein Ringflansch 3.2 und mindestens zwei Schenkel 3.3, 3.4 angeformt sind. Der Ringflansch 3.2 dient als Anschlag zur axialen Festlegung des Spreizniets 3 an dem Durchgangsloch 1.41. Der Abschnitt 3.1 ist mit einem Innengewinde versehen, in welches eine Schraube 3.5 eingedreht ist. Die Schenkel 3.3, 3.4 weisen an ihrer Innenseite, dem Außengewinde 3.51 der Schraube zugewandte Kontaktflächen auf, die sich zum freien Ende der Schenkel 3.3, 3.4 hin einander allmählich annähern. Durch Eindrehen der Schraube 3.5 in den ringförmigen Abschnitt 3.1 wird somit eine Spreizung der Schenkel 3.3, 3.4 bzw. eine kraftschlüssige Klemmverbindung von Spreizniet 3 und Federlenker 1 erreicht.

Die Befestigungsstellen 1.4 zur Anbindung der Federlenkerabdeckung 2 sind bei dem erfindungsgemäßen Federlenker 1 so ausgeführt, dass der Bauraum für eine benachbarte Fahrwerkskomponente, wie z.B. ein Modul eines adaptiven Dämpfungssystems, besser genutzt werden kann, bzw. so ausgeführt, dass der hierfür benötigte Bauraum trotz der Verwendung von Spreiznieten 3 erhalten bleibt. Zudem kann durch die erfindungsgemäße Ausführung der Befestigungsstellen 1.4 der Federlenkerabdeckung 2 der Bewegungsraum (Freigang) für das Dämpferbein eines an dem Federlenker 1 montierten Stoßdämpfers vergrößert werden.

Hierzu ist in mindestens einem der Seitenstege 1.32, 1.33 des Federlenkers 1 mindestens ein Absatz 1.42 ausgebildet, der zwischen dem Mittelsteg 1.31 und dem dem Mittelsteg abgewandten Kantenabschnitt 1.321, 1.331 des Seitensteges 1.32, 1.33 angeordnet ist und ein Durchgangsloch 1.41 zur Aufnahme eines Befestigungsmittels, z.B. eines Spreizniets 3 gemäß Fig. 4a, 4b, zur Anbindung der Federlenkerabdeckung 2 aufweist.

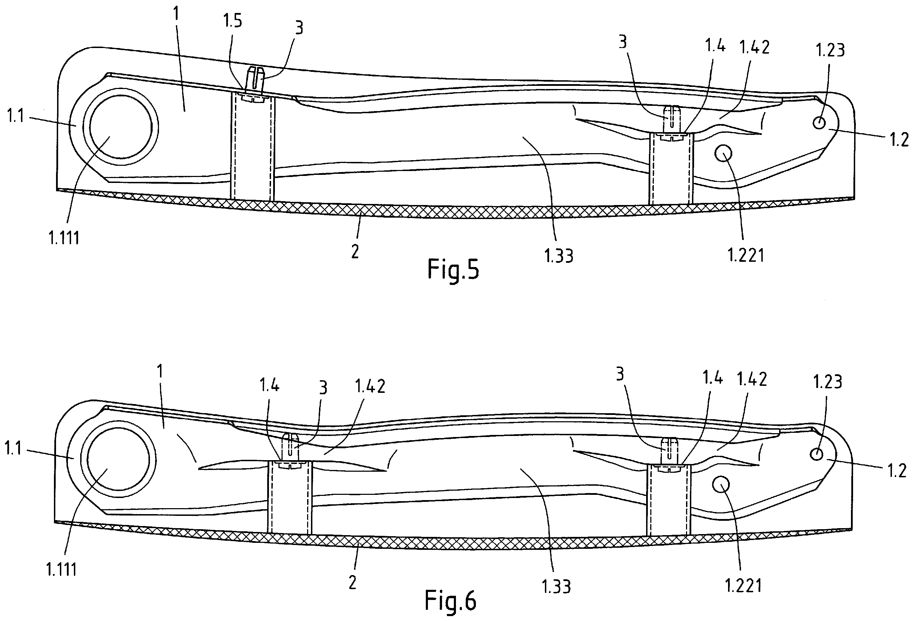

In Fig. 5 ist ein Ausführungsbeispiel eines erfindungsgemäßen Federlenkers 1 dargestellt, in dessen Seitenstegen 1.32, 1.33 jeweils ein Absatz 1.42 ausgebildet ist, wobei der jeweilige Absatz 1.42 zwischen dem Mittelsteg 1.31 und dem dem Mittelsteg abgewandten Kantenabschnitt 1.321,1.331 des betreffenden Seitensteges 1.32, 133 angeordnet ist und ein Loch 1.41 zur Aufnahme eines Spreizniets 3 oder dergleichen zur Anbindung einer Federlenkerabdeckung 2 aufweist.

Der Absatz 1.42 definiert eine im Wesentlichen parallel zu dem Kantenabschnitt 1.321, 1.331 und/oder zu dem Mittelsteg 1.31 verlaufende Anlagefläche 1.43, wobei das Loch 1.41 zur Anbindung der Federlenkerabdeckung 2 in der Anlagefläche 1.43 ausgebildet ist. Die Anlagefläche 1.43 stellt eine Anbindungsebene für die Federlenkerabdeckung 2 dar, wobei diese Anbindungsebene mindestens 10 mm, vorzugsweise mindestens 15 mm, besonders bevorzugt mindestens 20 mm von einer Tangentialebene beabstandet ist, an welcher der dem Mittelsteg 1.31 abgewandte Kantenabschnitt 1.321, 1.331 des Seitensteges 1.32, 1.33 angrenzt. Der Abstand der durch den Absatz 1.42 definierten Anlagefläche 1.43 bzw. Anbindungsebene von der an den Kantenabschnitt 1.321, 1.331 des Seitensteges 1.32, 1.33 angrenzenden Tangentialebene ist so bemessen, dass das Ende des in das Loch 1.41 eingesetzten Spreizniets 3 nicht über den Kantenabschnitt (Flansch) 1.321, 1.331 hinaus vorsteht, sondern vorzugsweise unterhalb des Kantenabschnitts 1.321, 1.331 endet (vgl. Figuren 5 und 6). Zudem liegt die Anlagefläche 1.43 vorzugsweise näher an dem Kantenabschnitt 1.321, 1.331 als an dem Mittelsteg 1.31.

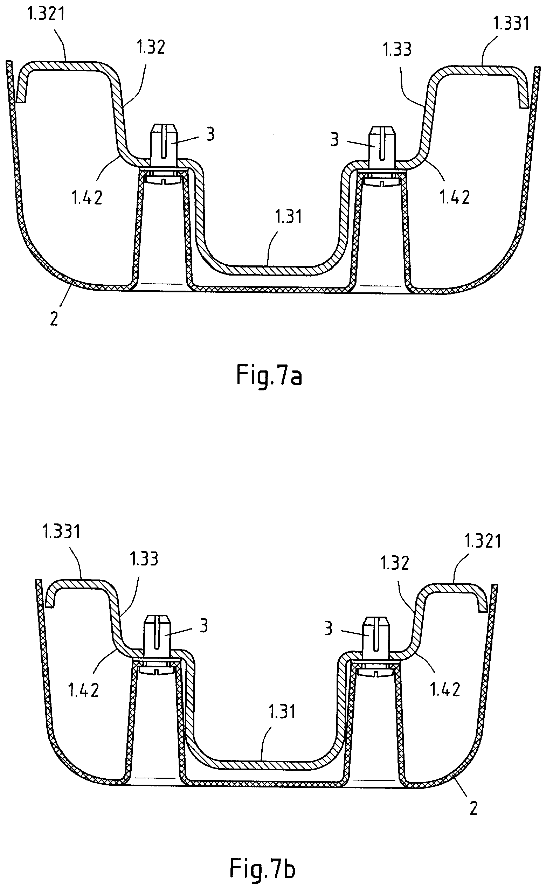

Bei dem Ausführungsbeispiel gemäß Fig. 5 sind die beiden Absätze 1.42 zwischen dem Abschnitt (Federsitz) 1.34 und dem der Anbindung eines Radträgers dienenden Endabschnitt 1.2 des Federlenkers 1 angeordnet. Die Durchgangslöcher 1.221 zur Anbindung eines Stoßdämpfers sind dabei unterhalb der in den Seitenstegen 1.32, 1.33 ausgeformten Absätzen 1.42 vorgesehen. Ferner verfügt der Federlenker gemäß Fig. 5 über mindestens zwei zusätzliche Befestigungsstellen 1.5 für die Federlenkerabdeckung 2, die relativ nahe an den Lageraugen 1.111 in dem Kantenabschnitt (Flansch) 1.321, 1.331 des jeweiligen Seitensteges 1.32, 1.33 ausgebildet sind. Diese Ausführungsform kann gewählt werden, wenn der Bauraum oberhalb des Kantenabschnitts 1.321, 1.331 nahe den Lageraugen 1.111 für vorstehende Spreiznieten 3 zur Verfügung steht und nicht für andere Zwecke, etwa für weitere Fahrwerkskomponenten benötigt wird. Wird jedoch der Bauraum oberhalb des Kantenabschnitts (Flansches) 1.321, 1.331 nicht nur im Bereich des Stoßdämpfers, sondern auch nahe den Lageraugen 1.111 zur Anordnung mindestens einer weiteren Fahrwerkskomponenten benötigt, so schlägt die Erfindung hierfür eine Ausführungsform des Federlenkers 1 vor, bei welcher alle Befestigungsstellen 1.4 der Federlenkerabdeckung 2 durch in den Seitenstegen 1.32, 1.33 ausgeformte Absätze 1.42 verwirklicht sind, wobei der jeweilige Absatz 1.42 ein Loch 1.41 zur Anbindung der Federlenkerabdeckung 2 aufweist. Eine solche Ausführungsform des Federlenkers 1 ist in den Figuren 1a, 1b, 2, 3a bis 3c, 6, 7a und 7b dargestellt.

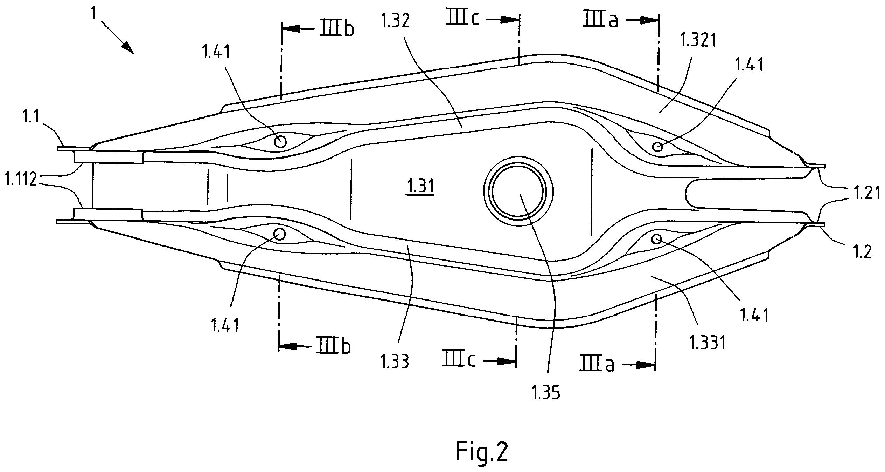

Insbesondere in Fig. 1a und in Fig. 2 ist zu erkennen, dass der Abstand der in den gegenüberliegenden Absätzen 1.42 ausgebildeten Löcher 1.41 kleiner ist als der größte Abstand der Seitenstege 1.32, 1.33 in dem breitenerweiterten Abschnitt 1.3 des Federlenkers 1. Die durch den jeweiligen Absatz 1.42 definierte Anlagefläche 1.43 ist durch zwei konvex gekrümmte Seitenlinien 1.44 begrenzt, welche zwei im Wesentlichen spitzförmige Flächenenden 1.45, 1.46 definieren. Die Anlagefläche 1.43 ist dabei länglich ausgebildet und entlang ihrer Längsachse leicht gekrümmt. Diese Merkmale der Anlagefläche 1.43, insbesondere das Verhältnis des Lochabstandes zu dem größten Abstand der Seitenstege 1.32, 1.33 in dem breitenerweiterten Abschnitt 1.3, treffen vorzugsweise auch auf das in Fig. 5 gezeigte Ausführungsbeispiel zu.

Die Ausführung des erfindungsgemäßen Federlenkers ist nicht auf die in der Zeichnung dargestellten Ausführungsbeispiele beschränkt. Vielmehr sind zahlreiche Varianten denkbar, die auch bei von den dargestellten Ausführungsbeispielen abweichender Ausführung von der in den Ansprüchen angegebenen Erfindung Gebrauch machen. So kann der erfindungsgemäße Federlenker beispielsweise auch derart ausgeführt sein, dass die Aufnahme 1.34 die Anbindung eines sogenannten Federdämpfers, d.h. eines mit einer schraubenförmigen Feder versehenen Stoßdämpfers ermöglicht. Der Stoßdämpfer ist dabei koaxial zur Längsmittelachse der schraubenförmigen Feder angeordnet.

## Patentansprüche

1. Federlenker (1) für eine Radaufhängung eines Kraftfahrzeuges, mit einem ersten Endabschnitt (1.1) zur Anbindung an einem Fahrwerksträger, einem zweiten Endabschnitt (1.2) zur radseitigen Anbindung und einem zwischen den beiden Endabschnitten (1.1, 1.2) angeordneten Abschnitt (1.3), der einen Mittelsteg (1.31) mit davon abstehenden Seitenstegen (1.32, 1.33) aufweist und eine Aufnahme (1.34) zur Abstützung oder Anbindung einer Feder definiert, und mit einer als Schutzabdeckung und/oder als aerodynamische Luftleitabdeckung dienenden Federlenkerabdeckung (2), wobei in beiden Seitenstegen (1.32, 1.33) jeweils mindestens ein Absatz (1.42) ausgeformt ist, wobei der jeweilige Absatz (1.42) zwischen dem Mittelsteg (1.31) und einem dem Mittelsteg (1.31) abgewandten Kantenabschnitt (1.321, 1.331) des betreffenden Seitensteges (1.32, 1.33) angeordnet ist, wobei der jeweilige Absatz (1.42) ein Loch (1.41) zur Anbindung der Federlenkerabdeckung (2) aufweist und somit eine Anbindungsstelle und Anlagefläche (1.43) für die Federlenkerabdeckung (2) definiert, und wobei die Federlenkerabdeckung (2) an dem Loch (1.41) des mindestens einen Absatzes (1.42) befestigt ist, wobei der dem Mittelsteg (1.31) abgewandte Kantenabschnitt (1.321, 1.331) des jeweiligen Seitensteges (1.32, 1.33) in Form eines Flansches ausgebildet ist, wobei die Anlagefläche (1.43) eine Anbindungsebene für die Anbindung der Federlenkerabdeckung (2) definiert, wobei diese Anbindungsebene mindestens 10 mm von einer Tangentialebene beabstandet ist, an welcher von beiden Seitenstegen (1.32, 1.33) der jeweilige dem Mittelsteg (1.31) abgewandte, in Form eines Flansches ausgebildete Kantenabschnitt (1.321,1.331) des jeweiligen Seitensteges (1.32, 1.33) angrenzt.

2. Federlenker nach Anspruch 1, **dadurch gekennzeichnet, dass** der Abstand der in den gegenüberliegenden Absätzen (1.42) ausgebildeten Löcher (1.41) kleiner ist als der größte Abstand der Seitenstege (1.32, 1.33) in dem eine Aufnahme (1.34) zur Abstützung oder Anbindung einer Feder definierenden Abschnitt (1.3).

3. Federlenker nach Anspruch 1 oder 2, **dadurch gekennzeichnet, dass** die von dem jeweiligen Absatz (1.42) definierte Anlagefläche (1.43) für die Federlenkerabdeckung (2) im Wesentlichen parallel zu dem jeweiligen in Form eines Flansches ausgebildeten Kantenabschnitt (1.321, 1.331) des jeweiligen Seitensteges (1.32, 1.33) und/oder zu dem Mittelsteg (1.31) verläuft, wobei das Loch (1.41) zur Anbindung der Federlenkerabdeckung (2) in der Anlagefläche (1.43) ausgebildet ist.

4. Federlenker nach einem der Ansprüche 1 bis 3, **dadurch gekennzeichnet, dass** die von der Anlagefläche (1.43) definierte Anbindungsebene mindestens 15 mm, besonders bevorzugt mindestens 20 mm von der Tangentialebene beabstandet ist, an welcher von beiden Seitenstegen (1.32, 1.33) der jeweilige dem Mittelsteg (1.31) abgewandte, in Form eines Flansches ausgebildete Kantenabschnitt (1.321,1.331) des jeweiligen Seitensteges (1.32, 1.33) angrenzt.

5. Federlenker nach Anspruch 3 oder 4, **dadurch gekennzeichnet, dass** die von dem jeweiligen Absatz (1.42) definierte Anlagefläche (1.43) näher an dem in Form eines Flansches ausgebildeten Kantenabschnitt (1.321,1.331) des Seitensteges (1.32,1.33), in welchem der Absatz (1.42) ausgeformt ist, liegt als an dem Mittelsteg (1.31).

6. Federlenker nach einem der Ansprüche 3 bis 5, **dadurch gekennzeichnet, dass** die Anlagefläche (1.43) durch zwei konvex gekrümmte Seitenlinien (1.44) begrenzt ist, welche zwei im Wesentlichen spitzförmige Flächenenden (1.45, 1.46) definieren.

7. Federlenker nach einem der Ansprüche 3 bis 6, **dadurch gekennzeichnet, dass** die Anlagefläche (1.43) länglich ausgebildet ist und entlang ihrer Längsachse gekrümmt ist.

8. Federlenker nach einem der Ansprüche 1 bis 7, **dadurch gekennzeichnet, dass** der Absatz (1.42) oder mindestens zwei der Absätze (1.42) zwischen der Aufnahme (1.34) zur Abstützung oder Anbindung einer Feder und dem zweiten Endabschnitt (1.2) des Federlenkers angeordnet ist/sind.

9. Federlenker nach Anspruch 8, **dadurch gekennzeichnet, dass** der jeweilige Seitensteg (1.32, 1.33) unterhalb des Absatzes (1.42) ein Loch (1.221) zur Anbindung eines Stoßdämpfers aufweist.

10. Federlenker nach einem der Ansprüche 1 bis 9, **dadurch gekennzeichnet, dass** ein derartiger Absatz (1.42) oder mindestens zwei derartige Absätze (1.42) zur Anbindung der Federlenkerabdeckung (2) zwischen der Aufnahme (1.34) zur Abstützung oder Anbindung einer Feder und dem ersten Endabschnitt (1.1) des Federlenkers angeordnet ist/sind.

11. Federlenker nach einem der Ansprüche 1 bis 10, **dadurch gekennzeichnet, dass** dieser als einschaliger Federlenker ausgeführt ist.

12. Federlenker nach einem der Ansprüche 1 bis 11, **dadurch gekennzeichnet, dass** im Bereich der Aufnahme (1.34) zur Abstützung oder Anbindung einer Feder eine Durchgangsöffnung (1.35) ausgebildet ist, die durch einen umlaufenden Kragen (1.36) begrenzt ist.

13. Federlenker nach einem der Ansprüche 1 bis 12, **dadurch gekennzeichnet, dass** der dem Mittelsteg (1.31) abgewandte Kantenabschnitt (1.321, 1.331) des jeweiligen Seitensteges (1.32, 1.33) in Form eines nach außen abgewinkelten Flansches ausgebildet ist.

## Claims

1. A spring control arm (1) for a wheel suspension of a motor vehicle, comprising a first end portion (1.1) for connection to a chassis support, a second end portion (1.2) for connection at the wheel side and a portion (1.3) arranged between the two end portions (1.1, 1.2) and having a central web (1.31) with side webs (1.32, 1.33) projecting therefrom and defining a receptacle (1. 34) for supporting or connecting a spring, and with a spring control arm cover (2) serving as a protective cover and/or as an aerodynamic air guide cover, wherein at least one shoulder (1.42) is formed in each of the two side webs (1.32, 1.33), the respective shoulder (1.42) being arranged between the central web (1.31) and an edge portion (1.321, 1.331) of the respective side web (1.32, 1.33) facing away from the central web (1.31), the respective shoulder (1.42) has a hole (1.41) for connecting the spring control arm cover (2) and thus defines a connection point and bearing surface (1.43) for the spring control arm cover (2), and the spring control arm cover (2) being fastened to the hole (1.41) of the at least one shoulder (1.42), wherein the edge portion (1.321, 1.331) of the respective side web (1.32, 1.33) facing away from the central web (1.31) being designed in the form of a flange, the bearing surface (1.43) defining a connection plane for the connection of the spring control arm cover (2), this connection plane being spaced at least 10 mm apart from a tangential plane to which the respective edge portion (1.321, 1.331) of the respective side web (1.32, 1.33) facing away from the central web (1.31) and designed in the form of a flange adjoins.

2. Spring control arm according to claim 1, **characterised in that** the distance between the holes (1.41) formed in the opposing shoulders (1.42) is smaller than the largest distance between the side webs (1.32, 1.33) in the section (1.3) defining a receptacle (1.34) for supporting or connecting a spring.

3. Spring control arm according to claim 1 or 2, **characterised in that** the bearing surface (1.43) for the spring control arm cover (2) defined by the respective shoulder (1.42) runs essentially parallel to the respective edge portion (1.321, 1.331) of the respective side web (1.32, 1.33) formed in the form of a flange and/or to the central web (1.31), the hole (1.41) for connecting the spring control arm cover (2) being formed in the bearing surface (1.43).

4. Spring control arm according to one of the claims 1 to 3, **characterised in that** the connection plane defined by the bearing surface (1.43) is spaced at least 15 mm, particularly preferably at least 20 mm, apart from the tangential plane to which the respective edge portion (1.321, 1.331) of the respective side web (1.32, 1.33) facing away from the central web (1.31) and formed in the form of a flange adjoins.

5. Spring control arm according to claim 3 or 4, **characterised in that** the bearing surface (1.43) defined by the respective shoulder (1.42) lies closer to the edge portion (1.321, 1.331), formed in the form of a flange, of the side web (1.32, 1.33) in which the shoulder (1.42) is formed than to the central web (1.31).

6. Spring control arm according to one of claims 3 to 5, **characterised in that** the bearing surface (1.43) is delimited by two convexly curved side lines (1.44) which define two essentially pointed surface ends (1.45, 1.46).

7. Spring control arm according to one of claims 3 to 6, **characterised in that** the bearing surface (1.43) is elongated and curved along its longitudinal axis.

8. Spring control arm according to one of claims 1 to 7, **characterised in that** the shoulder (1.42) or at least two of the shoulders (1.42) is/are arranged between the receptacle (1.34) for supporting or connecting a spring and the second end portion (1.2) of the spring control arm.

9. Spring control arm according to claim 8, **characterised in that** the respective side web (1.32, 1.33) has a hole (1.221) for connecting a shock absorber, said hole being arranged below the shoulder (1.42).

10. Spring control arm according to one of the claims 1 to 9, **characterised in that** such a shoulder (1.42) or at least two such shoulders (1.42) for connecting the spring control arm cover (2) is/are arranged between the receptacle (1.34) for supporting or connecting a spring and the first end portion (1.1) of the spring control arm.

11. Spring control arm according to one of claims 1 to 10, **characterised in that** this spring control arm is designed as a single-shell spring control arm.

12. Spring control arm according to one of claims 1 to 11, **characterised in that** a through opening (1.35) is formed in the region of the receptacle (1.34) for supporting or connecting a spring, which through opening (1.35) is delimited by a circumferential collar (1.36).

13. Spring control arm according to one of claims 1 to 12, **characterised in that** the edge portion (1.321, 1.331) of the respective side web (1.32, 1.33) facing away from the central web (1.31) is designed in the form of an outwardly angled flange.

## Revendications

1. Bras de suspension à ressort (1) pour une suspension de roue d'un véhicule automobile, avec une première partie d'extrémité (1.1) pouvant être raccordée à un support de châssis, une deuxième partie d'extrémité (1.2) pouvant être raccordée, côté roue, et une section (1.3) agencée entre les deux parties d'extrémité (1.1, 1.2), ladite section (1.3) présentant une âme centrale (1.31) avec d'âmes latérales (1.32, 1.33) faisant saillie à partir de celle-ci et définissant un logement (1.34) permettant de supporter ou raccorder un ressort, et avec un capot de bras de suspension à ressort (2) servant en tant que capot de protection et/ou en tant que capot de conduite d'air aérodynamique, au moins un épaulement (1.42) étant formé respectivement dans les deux âmes latérales (1.32, 1.33), l'épaulement (1.42) respectif étant agencé entre l'âme centrale (1.31) et une partie de bord (1.321, 1.331), opposée à l'âme centrale (1.31), de l'âme latérale (1.32, 1.33) concernée, l'épaulement (1.42) respectif présentant un trou (1.41) pour le raccordement au capot de bras de suspension à ressort (2), et définissant ainsi un point de raccordement et une surface d'appui (1.43) pour le capot de bras de suspension à ressort (2), et le capot de bras de suspension à ressort (2) étant fixé au trou (1.41) d'au moins un épaulement (1.42), la partie de bord (1.321, 1.331) de l'âme latérale (1.32, 1.33) respective étant conçue sous la forme d'une bride, ladite partie de bord (1.321, 1.331) étant opposée à l'âme centrale (1.31), la surface d'appui (1.43) définissant un plan de raccordement pour le raccordement du capot de bras de suspension à ressort (2), ce plan de raccordement étant espacé d'au moins 10 mm d'un plan tangent, auquel s'avoisine la partie de bord (1.321, 1.331) respective de l'âme latérale (1.32, 1.33) respective, ladite partie de bord (1.321, 1.331) étant opposée à l'âme centrale (1.31) et étant conçue sous la forme d'une bride.

2. Bras de suspension à ressort selon la revendication 1, **caractérisé en ce que** la distance des trous (1.41) conçus dans les épaulements opposés (1.42) est inférieure à la distance maximale d'âmes latérales (1.32, 1.33) dans la section (1.3) définissant un logement (1.34) pour le support ou raccordement d'un ressort.

3. Bras de suspension à ressort selon la revendication 1 ou 2, **caractérisé en ce que** la surface d'appui (1.43) définie par l'épaulement (1.42) respectif pour le capot de bras de suspension à ressort (2) passe essentiellement parallèlement par rapport à la partie de bord (1.321, 1.331) de l'âme latérale (1.32, 1.33) respective, ladite partie de bord (1.321, 1.331) étant conçue sous la forme d'une bride, et/ou par rapport à l'âme centrale (1.31), le trou (1.41) étant conçu pour le raccordement du capot de bras de suspension à ressort (2) dans la surface d'appui (1.43).

4. Bras de suspension à ressort selon l'une des revendications 1 à 3, **caractérisé en ce que** le plan de raccordement défini par la surface d'appui (1.43) est espacé d'au moins 15 mm, encore plus préférablement d'au moins 20 mm d'un plan tangent, auquel s'avoisine la partie de bord (1.321, 1.331) respective de l'âme latérale (1.32, 1.33) respective, ladite partie de bord (1.321, 1.331) étant opposée à l'âme centrale (1.31) et étant conçue sous la forme d'une bride.

5. Bras de suspension à ressort selon la revendication 3 ou 4, **caractérisé en ce que** la surface d'appui (1.43) définie par l'épaulement (1.42) respectif est plus proche de la partie de bord (1.321, 1.331) de l'âme latérale (1.32, 1.33) dans laquelle est formé l'épaulement (1.42) que de l'âme centrale (1.31), ladite partie de bord (1.321, 1.331) étant conçue sous la forme d'une bride.

6. Bras de suspension à ressort selon l'une des revendications 3 à 5, **caractérisé en ce que** la surface d'appui (1.43) est délimitée par deux lignes latérales curvilignes convexes (1.44) qui définissent deux extrémités de surface (1.45, 1.46) essentiellement en forme de pointe.

7. Bras de suspension à ressort selon l'une des revendications 3 à 6, **caractérisé en ce que** la surface d'appui (1.43) est conçue allongée et est incurvée le long de son axe longitudinal.

8. Bras de suspension à ressort selon l'une des revendications 1 à 7, **caractérisé en ce que** l'épaulement (1.42) ou au moins deux des épaulements (1.42) est/sont agencés entre le logement (1.34) pour le support ou le raccordement d'un ressort et la deuxième partie d'extrémité (1.2) du bras de suspension à ressort.

9. Bras de suspension à ressort selon la revendication 8, **caractérisé en ce que** l'âme latérale (1.32, 1.33) respective présente, en dessous de l'épaulement (1.42), un trou (1.221) pour le raccordement d'un amortisseur.

10. Bras de suspension à ressort selon l'une des revendications 1 à 9, **caractérisé en ce qu'**un tel épaulement (1.42) ou au moins deux desdits épaulements (1.42) est/sont agencés pour le raccordement du capot de bras de suspension à ressort (2) entre le logement (1.34) pour le support ou le raccordement d'un ressort et la première partie d'extrémité (1.1) du bras de suspension à ressort.

11. Bras de suspension à ressort selon l'une des revendications 1 à 10, **caractérisé en ce que** celui-ci est exécuté en tant que bras de suspension à ressort mono-pièce.

12. Bras de suspension à ressort selon l'une des revendications 1 à 11, **caractérisé en ce qu'**une ouverture de passage (1.35), délimitée par un collet circonférentiel (1.36), est formée dans la zone du logement (1.34) pour le support ou le raccordement d'un ressort.

13. Bras de suspension à ressort selon l'une des revendications 1 à 12, **caractérisé en ce que** la partie de bord (1.321,1.331) de l'âme latérale (1.32, 1.33) respective est conçue sous la forme d'une bride coudée vers l'extérieur, ladite partie de bord (1.321,1.331) étant opposée à l'âme centrale (1.31).
